# EUROPEAN PATENT APPLICATION

(11) **EP 3 296 906 A1**
(43) Date of publication of application: **21.03.2018**
(21) Application number: 15896181.3
(22) Date of filing: 20.11.2015
(51) Int. Cl.: G06F 21/14

(54) **METHOD FOR PROTECTING DEX FILE FROM BEING DECOMPILED IN ANDROID SYSTEM**

(30) Priority: 25.06.2015 CN 201510359041
(71) Applicant: Phicomm (Shanghai) Co., Ltd., Shanghai 201616 (CN)
(72) Inventor: LIU, Yunfeng, Shanghai 200050 (CN)
(74) Representative: Sun, Yiming
(86) International application number: PCT/CN2015/095200
(87) International publication number: WO 2016/206297

(57) **Abstract**

The present disclosure provides a method for protecting a dex file from being decompiled in an Android system. The method comprises the following content: 1) loading a dex file into an inaccessible memory of an Android system; and 2) during execution, by performing reference execution, preventing the dex file from being found. In the method for protecting a dex file from be ing decompiled in an Android system in the present disclosure, a dex file is loaded into an inaccessible memory by means of a reference method, so that the dex file is prevented from being locally downloaded tor being copied and propagated; during execution, by means of reference execution, a decompiling person is prevented from finding the dex file so that the decompiling person cannot perform reverse engineering, thereby protecting an Android program from being decompiled.

## Description

### TECHNICAL FIELD

The present disclosure relates to the field of dex file decompilation in an Android system and, in particular, to a method for protecting a dex file from decompilation in an Android system.

### BACKGROUND

Android is a free and open source operating system based on Linux, which is essentially used in mobile devices such as smartphones and tablets. Android is led and developed by Google and the Open Mobile Alliance. At present, the development of Android programs is in full swing. Because of the open-source nature, developers are exempt from high patent costs, encouraging the participation of advanced chip manufacturers and software vendors all over the world.

As the Android applications is written in the Java language, in order to circumvent the oracle (Java) virtual machine authorization, the Android system develops a set of Dalvik virtual machines itself. Dalvik virtual machines represent a virtual machine mechanism totally different from the classic Java virtual machines (JVMs). They are developed by Google with optimizations dedicated to the characteristics of mobile operating systems (especially the Android platform). Dalvik virtual machines convert bytecode files (.class format files) in traditional JVMs into bytecode files (dex format) running in the Dalvik virtual machines using a conversion tool called dx. Instruction codes of dex files are a dedicated instruction set for Dalvik virtual machines. This instruction set is optimized specifically for embedded systems. Compared to standard Java .class files, dex files have the advantages of small size, high operation efficiency, etc.

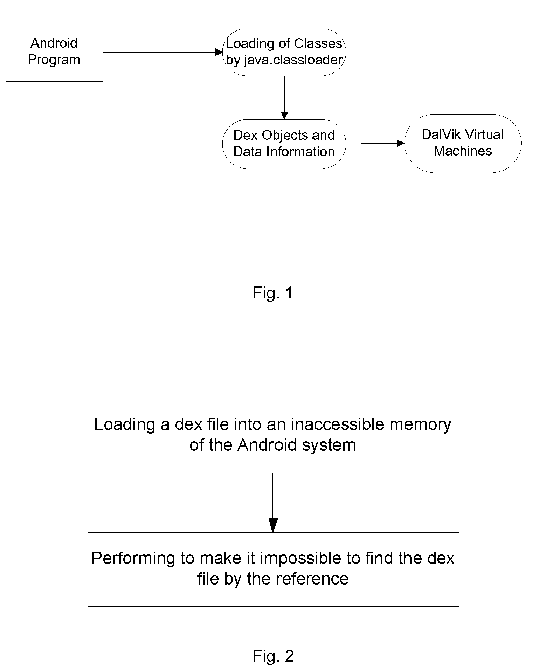

A Java bytecode file is composed of one or several .class files (each contains a class). As shown in Fig. 1, in operation, a JVM dynamically loads bytecodes from each .class file into the memory. In contrast, a Dalvik bytecode file consists of only one .dex file which contains all classes necessary for applications. When a Java compiler generates Java bytecodes, a Dalvik dx compiler deletes all .class files and recompiles the Java bytecodes into Dalvik bytecodes.

The current Java is a cross-platform, interpreted language. Java compilation tools compiles Java source codes into Java bytecode files. JVMs are responsible for interpreting Java bytecode files. Unlike native object codes, method names and variable names are still reserved in Java bytecode files, and used for accessing the variables and methods. These symbols typically contain much semantic information. Therefore, it is quite easy to decompile Java bytecode files. Many Java decompilation tools can generate high-quality source codes from Java bytecode files.

In order to prevent Java bytecode file from decompilation, a method employed in the prior art includes the steps of:
(1) encrypting a to-be-released Java bytecode file;
(2) monitoring a JVM initialization event with a JVM tool interface;
(3) specifying a Hook function for the JVM initialization events;
(4) upon the completion of JVM initialization, automatically calling the Hook function, and registering the function which is called by the JVM during the generation of class objects as a custom proxy function via a local Java interface;
(5) the defined proxy function is called by the JVM during the generation of a class object, and the encrypted Java bytecode file is decrypted in defined proxy function by the JVM;
(6) generating the corresponding class object from the decrypted Java bytecode file, and returning to the JVM.

However, the above technique is dedicatedly developed for the Java platform and standard JVMs and is obviously deficient in the field of Android smart mobile terminals. This is because although applications developed by the Android system are written in the Java language, they are not running in the traditional JMVs but in Dalvik virtual machines which have own stacks and compilation environment.

In the prior-art Java technology, protection of Java bytecodes from decompilation is majorly accomplished by the following approaches:

### (1) Isolation of Programs

Critical codes are stored in a server and services are remotely accessed, making it impossible to decipher the program codes.

### (2) Code Obfuscation

Difficulties are increased in decompilation and reading of decompiled source codes by means of changing the names of defined classes, variables, methods and packages to meaningless words or strings, substituting variable symbols with illegal characters, adding instructions that are irrelevant or will never be executed, or other methods. However, this approach cannot really prevent decompilation and the obfuscation follows some patterns.

### (3) Conversion of Local Codes

As C/C++ programs, Java programs are compiled into locally executable binary codes, which make the Java lose the characteristics of cross-platform. Additionally, this technique is not yet sophisticated enough to be suitably used for large scale applications.

### (4) Custom Class Loaders

Java bytecode files are firstly encrypted, and the decryption is performed when the Java bytecode files are loaded by a customized Java class loader. However, the defect of this approach is that although the encrypted Java bytecode files are unable to be decompiled, the customized class loader itself is immune from decompilation. As a result, the encrypted Java bytecode files are still insecure.

### SUMMARY

Embodiments of the present disclosure provide a method for protecting a dex file from decompilation in an Android system, in which, the dex file is loaded into the inaccessible memory by a reference method, so that the dex file cannot be loaded for duplication; and performing, by the reference, to make it impossible for a decompiler to find the dex file for reversing engineering which protects the Android program from decompilation.In order to achieve the above objects and other related objects, the present disclosure provides a method for protecting a dex file from decompilation in an Android system, including: 1) loading a dex file into an inaccessible memory of the Android system; 2) performing, by the reference, to make it impossible to find the dex file. In the method for protecting a dex file from decompilation in an Android system as defined above, the inaccessible memory is defined as a set of memory blocks without any accessible pointers and dynamically allocated by a computer program.In the method for protecting a dex file from decompilation in an Android system as defined above, in 1), the dex file is loaded into the inaccessible memory of the Android system by a reference method.

In the method for protecting a dex file from decompilation in an Android system as defined above, 1) comprise the steps of: a) launching a program by a user and sending of a loading request to the server and also requesting for a memory segment; b) checking, by the server, the dex file corresponding to a requesting Android installation package, and generating a new feature dex file and a reskey value to be pushed to a smart terminal; c) locking, by the smart terminal, the requested memory as unavailable memory; d) generating, by the smart terminal, a reference tree pointing to different resource blocks distinguished by the offsets; e) loading, by the Android system, the new feature dex file to be parsed into a bytecode; f) generating a new one-time reference by the reskey value referenced by the definition; g) re-parsing, by the locked memory, the bytecode to generate a executable dex bytecode with the referenced reskey, according to referencing the loaded parsed bytecode. In the method for protecting a dex file from decompilation in an Android system as defined above, if the inaccessible memory is illegally used, the dex file is cleaned immediately.

Further, in the method for protecting a dex file from decompilation in an Android system as defined above, the illegal use comprises duplication, modification reference, movement, illegal access and call.

Further, in the method for protecting a dex file from decompilation in an Android system as defined above, during the cleaning of the dex file, it is necessary to clean all data and traces related to the dex file from the unavailable memory.

Further, in the method for protecting a dex file from decompilation in an Android system as defined above, when the dex file is cleaned, the program doesn't run properly, it is necessary to re-load and re-install the program.

In the method for protecting a dex file from decompilation in an Android system as defined above, the method for protecting a dex file from decompilation in an Android system is applied in smart terminals using Android operating system.

Further, in the method for protecting a dex file from decompilation in an Android system as defined above, after the dex file for the program is removed, the smart terminals comprise smart phones, tablets and PDAs.

As mentioned above, the method for protecting a dex file from decompilation in an Android system of the present disclosure show the following benefits:
(1) Loading of a dex file into an inaccessible memory by a reference method ensures that core files of a program will not be duplicated, analyzed, transported or modified during the operation, which provides strong protection for security of the program.
(2) Execution based on reference method makes it impossible for a decompiler to find the dex file for reverse engineering, thereby further increase the security level of the application program in the Android system from the operating system level.

### BRIEF DESCRIPTION OF THE DRAWINGS

Fig. 1 is a schematic diagram showing the loading of a program in an Android system in accordance with the prior art.
Fig. 2 is a flowchart illustrating a method for protecting a dex file from decompilation in an Android system of the present disclosure.

### DETAILED DESCRIPTION

The present disclosure will be described below by means of specific embodiments. Other advantages and effects of the disclosure will be readily understood by those skilled in the art from the disclosure herein. The present disclosure may also be implemented or utilized as other different specific embodiments, and various modifications or changes may be made to the details disclosed herein from different views and for different applications without departing from the spirit of the disclosure.

It is noted that the drawings presented in the following embodiments are intended merely to illustrate the basic concept of the present disclosure in a schematic manner and hence only show the components related hereto which are not drawn to their quantities, shapes and sizes in actual implementations where their configurations, quantities and scales may vary arbitrarily and their arrangements may also be more complex.

In the method for protecting a dex file from decompilation in an Android system of the present disclosure, firstly, it is necessary to define an inaccessible memory as follows:
Inaccessible Memory

A set of memory blocks without any accessible pointers and dynamically allocated by a computer program.

In generally terms, an inaccessible memory is a dynamic memory that is not directly accessible by a program. It is also inaccessible by pointing to an accessible initial object with a pointer.

It is noted that the method for protecting a dex file from decompilation in an Android system of the present disclosure is applicable to smart terminals using an Android operating system. The smart terminals, to which the present disclosure relates, include, but not limited to, smart phones, tablets, PDAs and other terminal devices capable of data processing. In general terms, a smart terminal is a handheld terminal device of such a type that has its own independent operating system, allows the user to install programs provided by third-party service providers such as software and games so as to be increasingly diversified in functionality and is capable of wireless network access via mobile communication networks.

Referring to Fig. 2, the method for protecting a dex file from decompilation in an Android system of the present disclosure includes:
1) Loading of the dex file into an inaccessible memory in the Android system.
   Wherein, the dex file is loaded into the inaccessible memory in the Android system by a reference method. The reference method employs an index table that points to reskey values in the text. This index table is only generated when a program is executed. Every loading of the dex file requires a corresponding reskey value.
   Specifically, the following steps are included:
   a) launching a program by a user and sending a loading request to the server and also requesting for a memory segment;
   b) checking, by the server, the dex file corresponding to a requesting Android installation package, and generating a new feature dex file and a reskey value to be pushed to a smart terminal;
   c) locking, by the smart terminal, the requested memory as unavailable memory;
   d) generating, by the smart terminal, a reference tree pointing to different resource blocks distinguished by the offsets;
   e) loading, by the Android system, the new feature dex file to be parsed into a bytecode;
   f) generating a new one-time reference by the reskey value referenced by the definition;
   g) re-parsing, by the locked memory, the bytecode to generate an executable dex bytecode with the referenced reskey, according to referencing the loaded parsed bytecode. This step corresponds to a memory unlocking step. However, in fact, the locked memory provides only the parsed dex bytecode to the Android virtual machine. In such a way, separation is prevented and the memory deciphering prevention step achieves external unavailability.
2) Execuation based on the reference, which makes it impossible to find the dex file.

Preferably, if the inaccessible memory is illegally used, the dex file is cleaned immediately. Wherein, the illegal use includes, but not limited to, duplication, reference modification, movement, illegal access and calling. Wherein, during the cleaning of the dex file, it is necessary to clear all data and traces related to the dex file from the unavailable memory and report to a module that manages the inaccessible memory. When the dex file for the program is removed, the program will not run properly, requiring re-downloading and re-installation.

Loading of an Android program using the method for protecting a dex file from decompilation in an Android system of the present disclosure includes the steps of:
a) installation and running of an Android package (APK);
   Specifically, the APK is downloaded by a smart terminal over a network and installed to run.
b) loading of dex, lib, xml and other protected files by a server into an inaccessible memory of the smart terminal;
c) monitoring whether the program is normally executed by a module that manages the inaccessible memory;
d) immediate removal of the program in the event of illegal use of the unavailable memory. Wherein, the illegal use includes, but not limited to, duplication, reference modification, movement, illegal access and calling.

Wherein, during the removal of the program, it is necessary to clear all data and traces in the unavailable memory and report to the module that manages the inaccessible memory. After the dex, xml and other critical data in the program are removed, the program will not run properly, requiring re-downloading and re-installation.

In summary, in the method for protecting a dex file from decompilation in an Android system of the present disclosure, the dex file is loaded into an inaccessible memory by a reference method. This ensures core files of a program will not be duplicated, analyzed, transported or modified during the operation, providing strong protection for security of the program. In addition, execution based on a reference makes it impossible for a decompiler to find the dex file for reverse engineering. This further increases the security level of the application program in the Android system in terms of operating system. Therefore, the present disclosure has effectively overcome the various drawbacks of the prior art and has a high value in industrial use.

The embodiments presented above merely explain the principles and effects of the present disclosure exemplarily and are not intended to limit the disclosure. Any person familiar with the art can make modifications or changes to the above embodiments without departing from the spirit and scope of the disclosure. Accordingly, all equivalent modifications or changes made by those of ordinary skill in the art without departing from the spirit and technical concept disclosed herein are intended to be embraced by the claims of the present disclosure.

## Claims

1. A method for protecting a dex file from decompilation in an Android system, comprising:
1) loading a dex file into an inaccessible memory of the Android system;
2) making the dex file unable to be found when performing by reference.

2. The method for protecting a dex file from decompilation in an Android system according to claim 1, wherein the inaccessible memory is defined as a set of memory blocks without any accessible pointers and is dynamically allocated by a computer program.

3. The method for protecting a dex file from decompilation in an Android system according to claim 1, wherein in 1), the dex file is loaded into the inaccessible memory of the Android system by a reference method.

4. The method for protecting a dex file from decompilation in an Android system according to claim 1, wherein 1) comprises the steps of:
a) launching a program by a user and sending a loading request to the server and also requesting for a memory segment;
b) checking, by the server, the dex file corresponding to a requesting Android installation package, and generating a new feature dex file and a reskey value to be pushed to a smart terminal;
c) locking, by the smart terminal, the requested memory as unavailable memory;
d) generating, by the smart terminal, a reference tree pointing to different resource blocks distinguished by the offsets;
e) loading, by the Android system, the new feature dex file to be parsed into a bytecode;
f) generating a new one-time reference by the reskey value referenced by the definition; and
g) re-parsing, by the locked memory, the bytecode to generate an executable dex bytecode with the referenced reskey, according to referencing the loaded parsed bytecode.

5. The method for protecting a dex file from decompilation in an Android system according to claim 1, wherein if the inaccessible memory is illegally used, the dex file is cleaned immediately.

6. The method for protecting a dex file from decompilation in an Android system according to claim 4, wherein the illegal use comprises duplication, modification reference, movement, illegal access and call.

7. The method for protecting a dex file from decompilation in an Android system according to claim 4, wherein during the cleaning of the dex file, clean all data and traces related to the dex file from the unavailable memory.

8. The method for protecting a dex file from decompilation in an Android system according to claim 4, wherein after the dex file is cleaned, the program cannot run properly and need to be re-downloaded and re-installed.

9. The method for protecting a dex file from decompilation in an Android system according to claim 1, wherein the method for protecting a dex file from decompilation in an Android system is applied in smart terminals using Android operating system.

10. The method for protecting a dex file from decompilation in an Android system according to claim 9, wherein the smart terminals include smart phones, tablets and PDAs.
